## Europäisches Patentamt
## European Patent Office
## Office européen des brevets

(19)

(11) Veröffentlichungsnummer: **0 105 518**
**A2**

(12) # EUROPÄISCHE PATENTANMELDUNG

(21) Anmeldenummer: 83109871.0

(22) Anmeldetag: 03.10.83

(51) Int. Cl.³: **C 09 J 5/00**

(30) Priorität: 04.10.82 DE 3236711

(43) Veröffentlichungstag der Anmeldung:
18.04.84 Patentblatt 84/16

(84) Benannte Vertragsstaaten:
AT BE CH FR GB IT LI LU NL SE

(71) Anmelder: RASTRA AG
Rainstrasse 38a
Pfäffikon Gde. Freienbach(CH)

(72) Erfinder: Porkorny, Olaf
Hauptstrasse
Winzendorf(AT)

(72) Erfinder: Holik, Karl
Moorgasse
Wr. Neustadt(AT)

(74) Vertreter: Staeger, Sigurd, Dipl.-Ing. et al,
Patentanwälte Dr.-Ing. H. Fincke Dipl.-Ing. H. Bohr
Dipl.-Ing. S. Staeger Dipl.-Ing. Dipl.-Wirtsch.-Ing. R.
Sperling Müllerstrasse 31
D-8000 München 5(DE)

(54) **Verfahren und Vorrichtung zum Verbinden von zwei grossen Halbplatten.**

(57) Beim Verbinden von zwei großen, mit kanalförmigen Aussparungen versehenen Halbplatten, insbesondere für die Gebäudefertigbautechnik, welche aus einem atmungsaktiven Material, z.B. Polystyrolbeton mittels eines Klebers bestehen, wird ein fließfähiger Kleber, z.B. Wasser/Zement-Gemisch auf die erste Halbplatte in deren annähernd waagrechter Stellung aufgebracht und dann auf die erste Halbplatte die zweite Halbplatte abgesenkt und gleichzeitig eine Sogwirkung auf diese ausgeübt, bis der Kleber in die zweite Halbplatte eingedrungen ist.

FIG. 3

PATENTANWÄLTE
DR.-ING. H. FINCKE
DIPL.-ING. H. BOHR
DIPL.-ING. S. STAEGER
DIPL.-ING. R. SPERLING
DIPL-WIRTSCH.-ING.

EUROPEAN PATENT ATTORNEYS

PAe Dr. Fincke · Bohr · Stoeger · Sperling · Müllerstr. 31 · 8000 München 5

Müllerstraße 31
8000 MÜNCHEN 5,
℡ (089) *26 60 60
✝ Claims München
Telex: 5 239 03 claim d

Ihre/Your Ref.:

Unsere/Our Ref.:  C 08Q  St/Ro

**0105518**

3. Oktober 1983

POWER INDUSTRIEPLANUNG AG
Seestraße 6
CH - 8001 Zürich

"Verfahren und Vorrichtung zum Verbinden von
zwei großen Halbplatten"

Die Erfindung bezieht sich in erster Linie auf ein Verfahren zum Verbinden von zwei großen, mit kanalförmigen Aussparungen versehenen Halbplatten, welche aus einem atmungsaktiven Material mittels eines Klebers bestehen. Derartige Platten werden vornehmlich in der Gebäudefertigbautechnik verwendet und z.B. mit Polystyrolbeton miteinander verbunden.

Aus der DE-OS 2 940 347 ist ein Verfahren zur Formung von Halbplatten aus einem Leichtbaustoff, wie z.B. Kunststoffschaum, insbesondere Polystyrolschaum, Schaumbeton, Gasbeton, Blähbeton, Polystyrolbeton u.dgl.bekannt, bei dem die

- 2 -

beiden Halbplatten mittels eines Klebers miteinander verbunden werden.

Der Erfindung liegt die Aufgabe zugrunde, ein besonders wirtschaftliches Klebeverfahren für derartige Halbplatten zu schaffen.

Diese Aufgabe wird dadurch gelöst, daß ein fließfähiger Kleber, der schnell und gleichmäßig in die atmungsaktiven Oberflächen der beiden Halbplatten eindringen kann, auf die erste Halbplatte in deren annähernd waagrechter Stellung aufgebracht und dann auf die erste Halbplatte die zweite Halbplatte abgesenkt und gleichzeitig eine Sogwirkung auf diese ausgeübt wird, bis der Kleber in die zweite Halbplatte eingedrungen ist.

Dieses Verfahren eignet sich vor allen Dingen für eine Verbindung, bei denen beide Halbplatten mit kanalförmigen Aussparungen versehen sind, die sich teilweise decken müssen. Bei der Formung der eben erwähnten Halbplatten wird wie gewöhnlich ein Schnellbinder mitbenutzt, um die Abbindezeit zu verkürzen, so daß u.a. schon nach 24 Stunden ein im wesentlichen abgebundener Körper vorliegt. Demzufolge wird die Verbindung der beiden Halbplatten nach Erreichung der Formbeständigkeit, vorzugsweise innerhalb von 24 Stunden nach Formung derselben vorgenommen. In diesem Zusammenhang muß darauf hingewiesen werden, daß den Halbplatten bzw. zumindest einer derselben der Kleber in einem Zustand zugeführt wird, in dem die Druckfestigkeit der entsprechenden Halbplatte nur sehr gering ist, so daß das Erfassen oder Einspannen von noch nicht endgültig abgebundenen Halbplatten nicht nur auf Schwierigkeiten stößt, sondern auch zur Zerstörung oder mindestens Schädigung der Struktur der Halbplatten führen würde.

In einem besonders bevorzugten Verfahrensschritt wird die zweite Halbplatte vor dem Absenken auf die erste Halbplatte um ca. 180$^o$ verschwenkt oder gewendet, wobei vorzugsweise die zweite Halbplatte unter Sogwirkung in Wirkstellung gehalten wird. Wenn die beiden Halbplatten auf die eben genannte Weise zusammengeführt und miteinander verbunden werden, wird durch die vorgeschlagene Lösung erreicht, daß der Kleber, der einerseits nach dem Auftragen auf die erste Halbplatte durch Schwerkraft in das atmungsaktive Material eingedrungen ist, auch in der zweiten Halbplatte im Berührungsbereich eine durchtränkte Grenzschicht schafft.

Darüber hinaus wird auch vermieden, daß Klebstoffreste in die kanalförmigen Aussparungen, z.B. in der zweiten Halbplatte, eindringen, weil in diesem Bereich die Sogwirkung auf diese Halbplatte auf den Kleber keinen Einfluß hat.

Obgleich von der Art und der Menge des verwendeten Bindemittels in der zweiten Halbplatte, vom Profil und vom seitlichen Abstand bei der Formung abhängig ist, ob und inwieweit die Verbindung der beiden Halbplatten ein leichtes Aufsetzen ohne oder unter Druck erfolgt, wird letzteres, zumindest im geringen Umfang vorgezogen. Um zu vermeiden, daß die kanalförmigen Aussparungen der ersten Halbplatte beim Auftragen des Klebstoffs mit dem Klebstoff versehen werden, kann zum Aufbringen des Klebers eine Schablone verwendet werden. Auf diese Weise wird die Klebstoffmenge auf das erforderliche Maß verringert.

Der Erfindung liegt weiterhin die Aufgabe zugrunde, eine Vorrichtung zur Durchführung des oben angedeuteten Verfahrens zu schaffen.

Diese Aufgabe wird dadurch gelöst, daß erfindungsgemäß die Vorrichtung einen verschiebbaren Rahmen, Wagen oder Förderer und eine Hubvorrichtung aus mindestens einem Hubzylinder mit einem verschwenkbaren Rahmen enthält, wobei die Oberfläche des verschwenkbaren Rahmens mit Öffnungen versehen ist und der unter dem Rahmen vorgesehene Hohlraum eine Absaugvorrichtung aufweist. Es liegt auf der Hand, daß für die Vereinigung der beiden Halbplatten und zu deren Verbindung alle bekannten Fördermittel Verwendung finden können. Bedingung ist jedoch, daß die kanalförmigen Aussparungen mindestens in einer Halbplatte zur Klebefuge weisen. Ob und inwieweit auch die zweite Halbplatte kanalförmige Aussparungen oder auch nur teilweise dieselben aufweist, hängt vom späteren Verwendungszweck der Platteneinheit ab. Letztere wird gewöhnlich in einer Breite von 30 - 75 cm und einer Länge von 2,75 - 3,20 m hergestellt.

Nachfolgend wird als Ausführungsbeispiel eine Vorrichtung zur Durchführung des erfindungsgemäßen Verfahrens näher beschrieben; es zeigt:

Fig. 1 in stark schematisierter Darstellung die Stellung beider Halbplatten nach einer Heranführung derselben,

Fig. 2 die Stellung beider Halbplatten nach dem Auftragen des Klebers und

Fig. 3 die Stellung beider Halbplatten nach dem Verbinden bzw. Zusammenfügen.

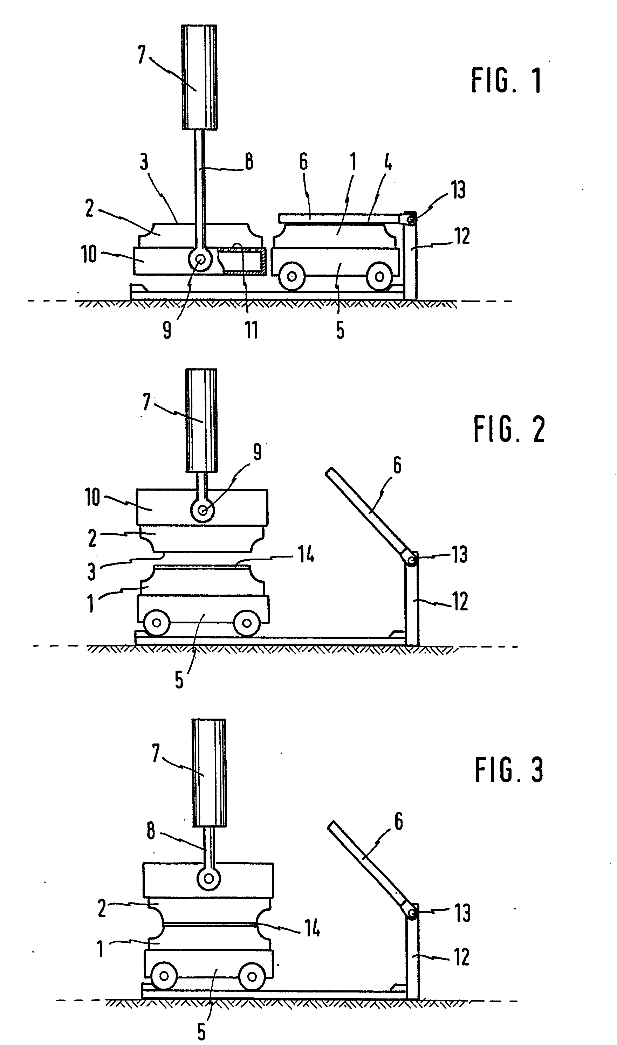

Zwei Halbplatten 1 und 2 in der Größe von ca. 0,50 x 2,80 m sind in einer Stellung getrennt von derjenigen in Fig. 1 beispielsweise auf die im Zusammenhang mit Fig. 6 der DE-OS 29 40 349 beschriebenen Weise hergestellt worden.

Beide Halbplatten weisen auf ihren Oberflächen 3,4 Aussparungen z.B. sich kreuzende kanalartige Aussparungen auf, die mindestens teilweise ein durchgehendes Kanalsystem in der Platte bilden. Bedingung für die Durchführung des Verfahrens ist jedoch, daß lediglich in der Platte 1 derartige kanalförmige Aussparungen vorgesehen sind, während solche in der Platte 2 überhaupt nicht vorhanden sein müssen oder nur teilweise angeordnet werden; im letzten Fall müssen jedoch die Begrenzungsflächen der kanalförmigen Aussparungen der beiden Halbplatten miteinander im wesentlichen übereinstimmen.

Die Halbplatte 1 liegt auf einem Wagen 5, der beispielsweise auf einem nicht näher dargestellten Schienensystem herangerollt worden ist. Die Oberfläche der Platte 1 ist nach Fig. 1 mit einer Schablone 6 bedeckt, die für den gleichmäßigen Auftrag des Klebstoffes sorgt; die Schablone hat an ihrer zur Oberfläche 4 zeigenden Seite Ausbauchungen oder Auswölbungen, die denjenigen der kanalförmigen Aussparungen der Platte 1 entsprechen, so daß der Klebstoff nur auf die der Ebene der Oberfläche 4 liegenden Restflächen aufgetragen wird.

Während bei der dargestellten Ausführungsform die beiden Halbplatten z.B. aus Polystyrolbeton bestehen, also beispielsweise ein Gemisch aus geschäumten Polystyrolteilchen mit einem Durchmesser bis zu 6 mm Zement, Wasser und einem geringen Anteil von Bindemitteln, wird als Klebstoff ein flüssiges Klebemittel z.B. ein Gemisch aus Wasser und Zement verwendet; gegebenenfalls können auch Zusätze wie Beschleuniger, Plastifizierer usw. Verwendung finden. Der Klebstoff soll streichfähig sein; falls ein Heißkleber Verwendung findet, wird dieser gewöhnlich aufgesprüht. Bedingung ist jedoch, daß der Kleber z.B. auf Gips-, Zementoder Kunststoffbasis schnell und gleichmäßig in die atmungsaktiven, d.h. porigen Oberflächen der beiden Halbplatten 1 und 2 eindringen kann.

In zwei synchron geschalteten Hubzylindern 7 ist jeweils eine Hubstange 8 verschiebbar gelagert, welche an einer Welle 9 drehbar ein rahmenartiges Gehäuse 10 lagert, welches aus einem Kasten gebildet ist, dessen Oberflächen 11 mit Löchern oder Öffnungen versehen sind. An den Kasten angeschlossen oder in denselben eingebaut ist eine Absaugvorrichtung z.B. ein Ventilator, durch dessen Hilfe auf die Unterseite der Platte 2 eine Sogwirkung ausgeübt werden kann. Diese Sogwirkung reicht nicht nur aus, die noch im Abbindezustand befindliche Halbplatte 2 in der in Fig. 1 dargestellten Lage zu halten, sondern, wie weiter unten angegeben, diese Platte auch in einer um 180$^{\circ}$ verschwenkten oder gewendeten Stellung zu halten.

Nach dem Einziehen der Hubstange 8 wird das Gehäuse 10 mittels der Welle 9 um 180° verschwenkt, so daß die Oberfläche 3 der Halbplatte 2 nunmehr zur herangeführten Halbplatte 1 weist, welche die Klebstoffschicht 14 trägt. Die Schablone 6 ist an einer Stütze 12 über ein Gelenk 13 verschwenkbar gelagert und war vor dem Verfahren des Wagens 5 abgeschwenkt worden.

Genauso wie die Bewegung der einzelnen Halbplatten zueinander entweder jeweils in Längsrichtung zueinander oder in Querrichtung zueinander oder auch teils in der einen Richtung und teils in der anderen Richtung erfolgen kann, so ist es auch möglich, daß das Hubzylinderpaar 7 in Richtung auf die feststehende Halbplatte 1 verfahren wird und daß danach erst das Absenken der Halbplatte 2 erfolgt.

Die im Kasten 10 durch die Öffnungen 11 auf die Halbplatte 2 aufrechterhaltene Sogwirkung dient also nicht nur zum Festhalten der Halbplatte 2 am Kasten 10 sondern wie weiter oben erwähnt, vor allem dazu, den in der Klebeschicht 14 vorgesehenen Klebstoff über die Berührungsschichten mit dem Klebstoff in den Grenzbereich der Halbplatte 2 hereinzuziehen, so daß der Kleber nicht nur an der porigen Berührungsfläche der beiden Halbplatten vorgesehen ist, sondern auch in den Grenzbereichen der beiden letzteren.

Auch wenn die Verbindung der beiden Halbplatten zweckmäßigerweise unter einem leichten Druck erfolgt, kann dieser aufgrund der beschriebenen Kleberverteilung in der Grenzschicht zumindest für die Verklebung der beiden Halbplatten vollständig entfallen. Durch die lediglich im Kontaktbereich der Halbplatte 2 mit der Klebeschicht 14 ausgeübten Sogwirkung wird darüber hinaus auch unter Einsparung der Klebermasse eine "saubere" Klebeschicht erhalten, da die Sogwirkung außerhalb der Berührungsflächen der Halbplatte 2 mit dem Klebstoff praktisch wirkungslos ist.

Wie bereits weiter oben ausgeführt, kann je nach Ausbildung der Anlage zum Formen der Halbplatte die Zuführung der einzelnen Halbplatten und die Vereinigung derselben auf verschiedene Art und Weise erfolgen, wobei jedoch eine schrittweise Arbeitsweise einerseits von der Größe der Anlage und andererseits von den Abbindezeiten der verwendeten Materialien abhängig ist.

-8-

PATENTANSPRÜCHE

1. Verfahren zum Verbinden von zwei großen, mit kanalförmigen Aussparungen versehenen Halbplatten, bestehend aus einem atmungsaktiven Material mittels eines Klebers,dadurch gekennzeichnet, daß ein fließfähiger Kleber, der schnell und gleichmäßig in die atmungsaktiven Oberflächen der beiden Halbplatten eindringen kann, auf die erste Halbplatte in deren annähernd waagrechter Stellung aufgebracht und dann auf die erste Halbplatte die zweite Halbplatte abgesenkt und gleichzeitig eine Sogwirkung auf diese ausgeübt wird, bis der Kleber in die zweite Halbplatte eingedrungen ist.

2. Verfahren nach Anspruch 1,dadurch gekennzeichnet, daß die zweite Halbplatte vor dem Absenken auf die erste Halbplatte um ca. 180$^{o}$ verschwenkt wird, wobei vorzugsweise die zweite Halbplatte unter Sogwirkung in Wirkstellung gehalten wird.

3. Verfahren nach einem der Ansprüche 1 oder 2, dadurch gekennzeichnet, daß die Verbindung der Halbplatten unter Druck erfolgt.

4. Vorrichtung zum Durchführen des Verfahrens nach einem der vorhergehenden Ansprüche, dadurch gekennzeichnet, daß sie einen verschiebbaren Rahmen, Wagen oder Förderer und eine Hubvorrichtung aus mindestens einem Hubzylinder mit einem verschwenkbaren Rahmen enthält, wobei die Oberfläche des verschwenkbaren Rahmens mit Öffnungen versehen ist und der unter dem Rahmen vorgesehene Hohlraum eine Absaugvorrichtung aufweist.

0105518

1/1

FIG. 1

FIG. 2

FIG. 3